# EUROPEAN PATENT APPLICATION

(11) **EP 4 750 077 A1**
(43) Date of publication of application: **27.05.2026**
(21) Application number: 25216424.9
(22) Date of filing: 17.11.2025
(51) Int. Cl.: H04N 25/587, H04N 25/773, H04N 25/78, H04N 25/53

(54) **IMAGE PROCESSING APPARATUS, IMAGE PROCESSING METHOD, PROGRAM, AND STORAGE MEDIUM**

(30) Priority: 25.11.2024 JP 2024204575
(71) Applicant: Canon Kabushiki Kaisha, Tokyo, 146-8501 (JP)
(72) Inventor: AKIMOTO, Yoshiyuki, Tokyo, 146-8501 (JP)
(74) Representative: Canon Europe Limited

(57) **Abstract**

An image processing apparatus including: an acquisition unit (603) configured to acquire subframes, which have different exposure periods during an image capturing period for one frame, from a photoelectric conversion element capable of performing a nondestructive readout for each of the subframes, a recognition unit (604) configured to perform a predetermined recognition process on the acquired subframes in a first frame, and an identification unit (605) configured to identify, among the subframes, a subframe for which a result of the predetermined recognition process satisfies a predetermined condition. In a case where the predetermined recognition process is performed on the acquired subframes in a second frame after the first frame, the predetermined recognition process is performed on a subframe among the acquired subframes in the second frame, the subframe corresponding to the subframe that is identified by the identification unit (605) and satisfies the predetermined condition in the first frame.

## Description

### TECHNICAL FIELD

The present disclosure relates to an image processing apparatus, an image processing method, a program, and a storage medium.

### BACKGROUND

In recent years, photoelectric conversion elements have been developed that digitally count the number of photons incident on an avalanche photodiode (APD) and output the count value as a photoelectrically converted digital signal from the pixel. It is known that photoelectric conversion elements equipped with APDs are capable of non-destructive readout, unlike existing complementary metal-oxide-semiconductor (CMOS) sensors. Japanese Patent Laid-Open No. 2021-153346 discloses an image capturing apparatus that has a photoelectric conversion element equipped with APDs and can acquire multiple images whose exposure periods overlap each other.

### SUMMARY

In image recognition techniques, it is well known that the recognition rate tends to decrease in cases where the image is too bright, too dark, or the subject is blurred.

Thus, if a recognition process is performed on all captured images in an image capturing apparatus capable of acquiring multiple images whose exposure periods overlap each other as in Japanese Patent Laid-Open No. 2021-153346, the processing load increases.

The present disclosure is directed to reduce the processing load caused by image recognition processing.

The present disclosure in its first aspect provides an image processing apparatus as specified in claim 1. Optional features are specified in claims 2 to 11.

The present disclosure in its second aspect provides an image processing method as specified in claim 12.

The present disclosure in its third aspect provides a program as specified in claim 13.

The present disclosure in its fourth aspect provides a computer-readable storage medium as specified in claim 14.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of the configuration of a photoelectric conversion element.
Fig. 2 is a diagram illustrating an example of the configuration of a sensor substrate.
Fig. 3 is a diagram illustrating an example of the configuration of a circuit substrate.
Fig. 4 is a diagram illustrating one of pixels in Figs. 2 and 3 and an equivalent circuit of a signal processing circuit corresponding to the pixel.
Fig. 5 is a diagram schematically illustrating the relationship between the operation of an APD and an output signal.
Fig. 6 is a functional block diagram of a photoelectric conversion apparatus.
Fig. 7 is a diagram illustrating a photoelectric conversion method performed by a camera controller.
Fig. 8 is a diagram illustrating an example of images of multiple frames obtained as a result of division.
Fig. 9 is a diagram illustrating the relationship between memory circuits and buffers.
Fig. 10 is a flowchart detailing an example of the way in which the photoelectric conversion element is driven.
Fig. 11 is a flowchart that is a continuation of Fig. 10.
Fig. 12 is a flowchart detailing an example of driving to reduce processing load.
Fig. 13 is a flowchart detailing an example of driving to reduce processing load in a case where there are multiple subjects.

### DESCRIPTION OF THE EMBODIMENTS

The following is a detailed description of embodiments of the present disclosure with reference to the accompanying drawings. The embodiments described below are examples as ways to realize the present disclosure and are to be modified or changed as appropriate depending on the configuration and various conditions of the apparatus to which the present disclosure is applied. The present disclosure is not limited to the following embodiments. Part of each embodiment described below may be combined as appropriate. Each of the embodiments of the present invention described below can be implemented solely or as a combination of a plurality of the embodiments or features thereof where necessary or where the combination of embodiments or features from individual embodiments in a single embodiment is beneficial.

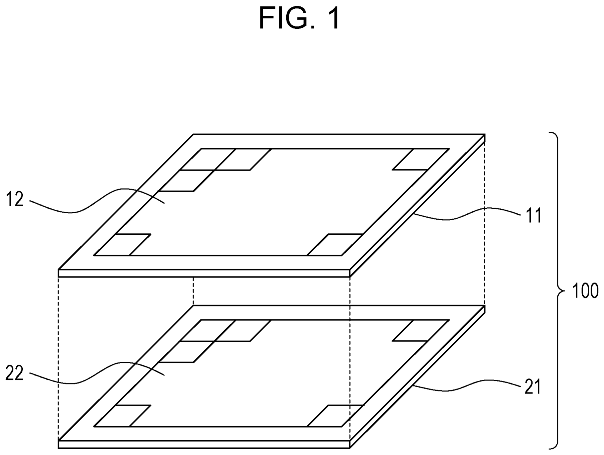

Fig. 1 is a diagram illustrating an example of the configuration of a photoelectric conversion element according to the present embodiment. A photoelectric conversion element 100 has a configuration in which two substrates, a sensor substrate 11 and a circuit substrate 21, are stacked and electrically connected to each other. A so-called photoelectric conversion apparatus having a multilayer structure will be described as an example of the photoelectric conversion element 100 below. However, the photoelectric conversion element 100 may also have a non-multilayer structure in which the configuration included in the sensor substrate 11 and the configuration included in the circuit substrate 21 are arranged in the same semiconductor layer. The sensor substrate 11 includes a pixel region 12. The circuit substrate 21 includes a circuit region 22, which processes signals detected in the pixel region 12.

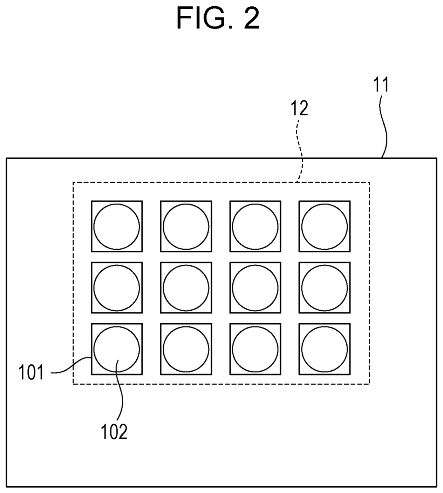

Fig. 2 is a diagram illustrating an example of the configuration of the sensor substrate 11. The pixel region 12 of the sensor substrate 11 includes pixels 101 that are arranged in two dimensions across multiple rows and columns. Each pixel 101 includes a photoelectric conversion unit 102, which includes an avalanche photodiode (hereinafter referred to as "APD").

In this case, the photoelectric conversion unit 102 functions as a sensor unit that emits pulses at a frequency corresponding to the frequency of photon reception. Note that the number of rows and that of columns of the pixel array that makes up the pixel region 12 are not particularly limited.

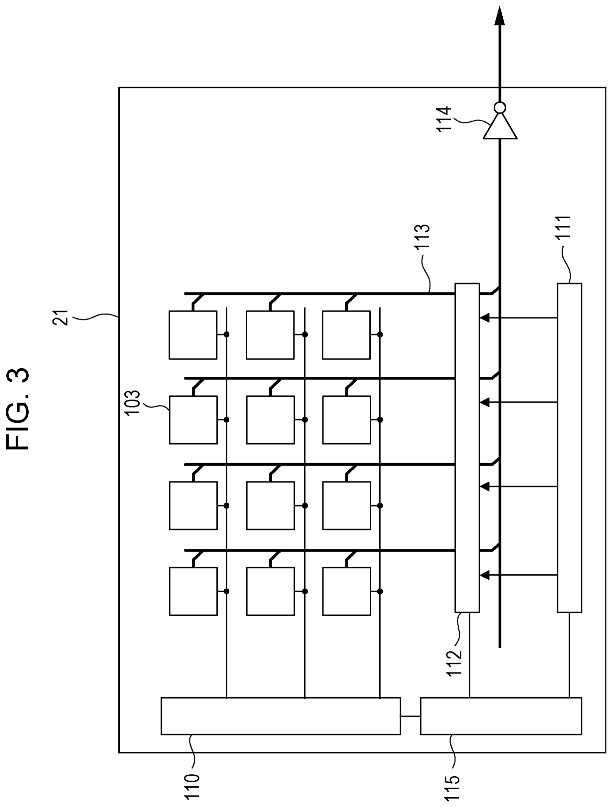

Fig. 3 is a diagram illustrating an example of the configuration of the circuit substrate 21. The circuit substrate 21 includes signal processing circuits 103, a readout circuit 112, a control pulse generation unit 115, a horizontal scan circuit 111, vertical signal lines 113, a vertical scan circuit 110, and an output circuit 114. The signal processing circuits 103 process electric charge that is photoelectrically converted by the respective photoelectric conversion units 102 in Fig. 2.

The vertical scan circuit 110 receives control pulses supplied from the control pulse generation unit 115 and supplies the control pulses sequentially to multiple pixels arranged in the row direction. For the vertical scan circuit 110, logic circuits such as shift registers and address decoders are used.

Signals output from the photoelectric conversion unit 102 of each pixel are processed by the corresponding signal processing circuit 103. The signal processing circuit 103 has, for example, a counter and a memory, and the memory holds digital values. The horizontal scan circuit 111 inputs, to the signal processing circuits 103, control pulses that select each column in a sequential manner in order to read out signals from the memories of the respective pixels, which store digital signals.

To the vertical signal lines 113, signals from the signal processing circuits 103 of the pixels in the row selected by the vertical scan circuit 110 are output. The signals output to the vertical signal lines 113 are output to the outside of the photoelectric conversion element 100 through the readout circuit 112 and the output circuit 114. The readout circuit 112 includes multiple buffers connected to the respective vertical signal lines 113.

As illustrated in Figs. 2 and 3, the multiple signal processing circuits 103 are arranged in a region that overlaps the pixel region 12 in plan view. In plan view, the vertical scan circuit 110, the horizontal scan circuit 111, the readout circuit 112, the output circuit 114, and the control pulse generation unit 115 are arranged to overlap the region between the edges of the sensor substrate 11 and the edges of the pixel region 12.

In other words, the sensor substrate 11 has the pixel region 12 and a non-pixel region surrounding the pixel region 12. The vertical scan circuit 110, the horizontal scan circuit 111, the readout circuit 112, the output circuit 114, and the control pulse generation unit 115 are arranged in the region that overlaps the non-pixel region in plan view.

Note that the arrangement of the vertical signal lines 113 and the arrangement of the readout circuit 112 and the output circuit 114 are not limited to the example illustrated in Fig. 3. For example, the vertical signal lines 113 may be arranged so as to extend in the row direction, and the readout circuit 112 may be arranged at a position beyond the vertical signal lines 113 and in the direction in which the vertical signal lines 113 extend. Moreover, the signal processing circuits 103 are not necessarily provided on a one-to-one basis for the photoelectric conversion units. One signal processing unit may be shared among multiple photoelectric conversion units to perform sequential signal processing.

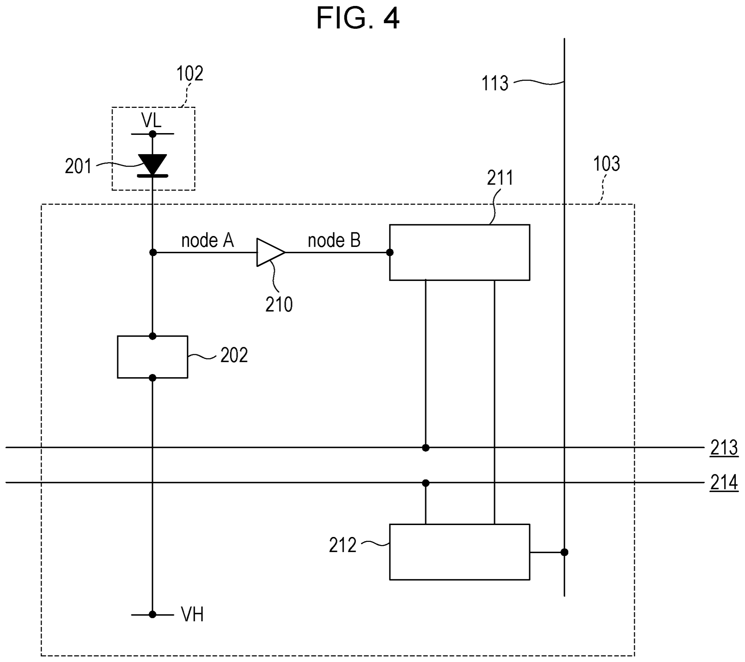

Fig. 4 is a diagram illustrating one of the pixels 101 in Figs. 2 and 3 and an equivalent circuit of the signal processing circuit 103 corresponding to the pixel 101.

The APD 201 included in the photoelectric conversion unit 102 generates charge pairs in response to incident light through photoelectric conversion. One of two nodes of the APD 201 is connected to a power supply line to which a drive voltage VL (a first voltage) is supplied. The other of the two nodes of the APD 201 is connected to a power supply line to which a drive voltage VH (a second voltage) higher than the voltage VL is supplied.

In Fig. 4, the one node of the APD 201 is an anode, and the other node of the APD 201 is a cathode. The anode and cathode of the APD 201 are supplied with a reverse bias voltage such that the APD 201 performs an avalanche multiplication operation. With such a voltage being supplied, the electric charge generated by incident light causes avalanche multiplication and avalanche current is generated.

Note that in a case where a reverse bias voltage is supplied, there are Geiger mode and a linear mode. The Geiger mode operates with a voltage difference between the anode and the cathode that is greater than the breakdown voltage. The linear mode operates with a voltage difference between the anode and the cathode that is near or less than or equal to the breakdown voltage. An APD that operates in the Geiger mode is called a SPAD. In the case of a SPAD, for example, the voltage VL (the first voltage) is -30 V, and the voltage VH (the second voltage) is 1 V.

Each signal processing circuit 103 includes a quenching device 202, a waveform shaping unit 210, a counter circuit 211, and a memory circuit 212. The quenching device 202 is connected to the power supply line to which the drive voltage VH is supplied and to either the anode or cathode of the APD 201.

The quenching device 202 functions as a load circuit (a quenching circuit) during signal multiplication due to avalanche multiplication and suppresses the voltage supplied to the APD 201 to suppress avalanche multiplication (a quenching operation). The quenching device 202 also works to return the voltage supplied to the APD 201 to the drive voltage VH by causing current for the voltage drop caused by the quenching operation to flow (a recharge operation).

Fig. 4 illustrates an example in which each signal processing circuit 103 includes the waveform shaping unit 210, the counter circuit 211, and the memory circuit 212 in addition to the quenching device 202. However, it is sufficient that the signal processing circuit 103 include at least one of the waveform shaping unit 210, the counter circuit 211, and the memory circuit 212 in addition to the quenching device 202.

The waveform shaping unit 210 shapes the voltage change at the cathode of the APD 201 obtained during photon detection and outputs a pulse signal. For example, an inverter circuit is used as the waveform shaping unit 210. Fig. 4 illustrates an example in which a single inverter is used as the waveform shaping unit 210; however, a circuit in which multiple inverters are connected in series may be used or any other circuit that has a waveform shaping effect may also be used.

The counter circuit 211 counts the number of pulses output from the waveform shaping unit 210 and holds the count value. When a control pulse RES is supplied through a drive line 213, the signal held in the counter circuit 211 is reset. In this case, the counter circuit 211 generates a signal based on the difference between the count values at the beginning and end of an accumulation time (an exposure period).

The memory circuit 212 is supplied with a control pulse SEL from the vertical scan circuit 110 in Fig. 3 through a drive line 214 in Fig. 4 (not illustrated in Fig. 3) to switch between an electrical connection and an electrical disconnection between the counter circuit 211 and the vertical signal line 113. The memory circuit 212 functions as a memory that temporarily stores the count value of the counter and outputs the output signal from the counter circuit 211 of the pixel to the vertical signal line 113.

Note that a switch such as a transistor may be placed between the quenching device 202 and the APD 201 or between the photoelectric conversion unit 102 and the signal processing circuit 103 to switch the electrical connection.

Similarly, the voltage VH or the voltage VL supplied to the photoelectric conversion unit 102 may be electrically switched using a switch such as a transistor.

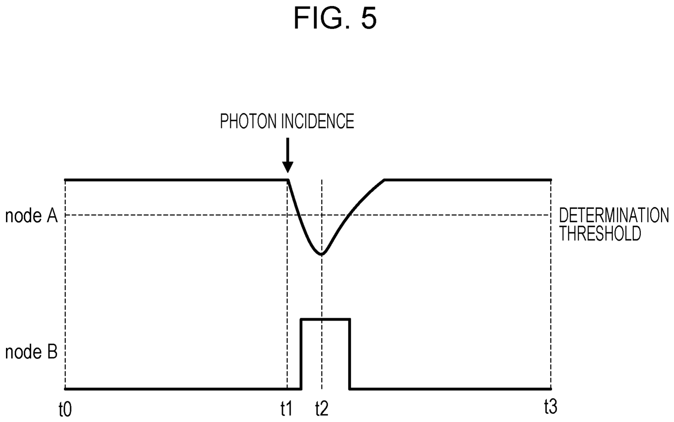

Fig. 5 is a diagram schematically illustrating the relationship between the operation of the APD 201 and the output signal. The input side node of the waveform shaping unit 210 is a node A, and the output side node thereof is a node B. From a time t0 to a time t1, an electric potential difference of VH - VL is applied to the APD 201. When a photon is incident on the APD 201 at the time t1, avalanche multiplication occurs in the APD 201 and an avalanche multiplication current flows to the quenching device 202 so that the voltage at the node A drops.

When the amount of voltage drop becomes even larger and the electric potential difference applied to the APD 201 becomes smaller, the avalanche multiplication in the APD 201 stops as at a time t2 and the voltage level at the node A does not drop below nor reach a certain value. Thereafter, from the time t2 to a time t3, a current flows from the voltage VL to the node A to compensate for the amount of voltage drop, the voltage level at the node A returns to its previous level and becomes stable at the time t3. In this case, the portion of the output waveform that exceeds a certain threshold at the node A is subjected to waveform shaping at the waveform shaping unit 210 and is output as a pulse signal from the node B.

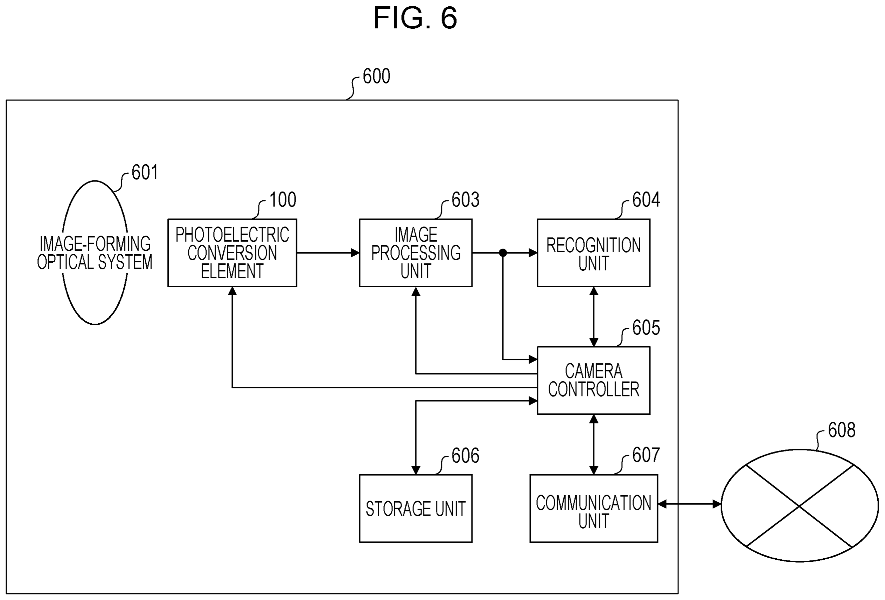

Next, a photoelectric conversion apparatus 600 according to the present embodiment will be described. Fig. 6 is a functional block diagram of the photoelectric conversion apparatus 600 according to the present embodiment. Note that one or more of the functional blocks illustrated in Fig. 6 are realized by having a computer (not illustrated) included in the photoelectric conversion apparatus 600 execute a computer program stored in a memory serving as a storage medium that is not illustrated.

However, one or more or all of the function blocks may be implemented using hardware. As the hardware, a dedicated circuit (ASIC) or a processor (a reconfigurable processor, a DSP) can be used. Each of the functional blocks illustrated in Fig. 6 need not be built into the same housing. The functional blocks may be separate devices connected to each other via signal paths.

### About Photoelectric Conversion Apparatus

The photoelectric conversion apparatus 600 includes, for example, the photoelectric conversion element 100 described using Figs. 1 to 5, an image-forming optical system 601, an image processing unit 603 (also referred to as an acquisition unit), a recognition unit 604, a camera controller 605 (also referred to as an identification unit), a storage unit 606, and a communication unit 607. The photoelectric conversion element 100 includes the avalanche photodiodes (APDs) described using Figs. 1 to 5 for photoelectrically converting optical images. Since the photoelectric conversion element 100 uses the APDs, non-destructive readout is possible. That is, the electric charge is not degraded by reading out signals. Thus, even when signals are read out repeatedly in multiple subframes during the exposure period for one frame, the original signals can be read out without being degraded. Although a case where a photoelectric conversion element using APDs is used will be described in the present embodiment, the provision of APDs is not always necessary as long as an imaging device capable of non-destructive readout is used.

The image processing unit (acquisition unit) 603 performs image processing on the image signal acquired by the photoelectric conversion element 100 to generate the final image signal. Examples of the image processing include black level correction, gamma curve adjustment, noise reduction, and data compression. Note that in a case where the photoelectric conversion element 100 has on-chip color filters such as RGB, the image processing unit 603 may perform processing such as white balance correction and color conversion.

The output from the image processing unit 603 is supplied to the recognition unit 604 and the camera controller 605. The recognition unit 604 performs a predetermined recognition process based on the image signal. Examples of the predetermined recognition process include, for example, subject recognition (also known as object recognition) for humans and vehicles, character recognition, image recognition, and recognition of specific abnormalities such as a specific fire. These recognition processes are affected by the quality of the image signal and include recognition processes affected by, for example, image brightness and subject blurring caused by changes in exposure time. In the present embodiment, description will be made assuming that subject recognition is performed. Moreover, the recognition unit 604 calculates a recognition rate as the reliability (likelihood) of the subject. For example, in a case where the subject to be recognized is a person, the reliability (likelihood) that the subject in the image is a person is referred to as "recognition rate". In the present embodiment, the recognition rate is expressed as 0 to 100%. The higher the numerical value of the recognition rate, the higher the reliability (likelihood).

The camera controller 605 includes a central processing unit (CPU), which serves as a computer, and a memory that stores a computer program, and controls various units of the photoelectric conversion apparatus 600 by the CPU executing the computer program stored in the memory.

Note that the camera controller 605 functions as a control unit. For example, the camera controller 605 controls, for example, the length of the exposure period of each frame of the photoelectric conversion element 100 and the timing of a control signal CLK through, for example, the control pulse generation unit 115 of the photoelectric conversion element 100.

The storage unit 606 includes, for example, a recording medium that can store image signals and from which image signals can be read out. Examples of the recording medium include a memory card and a hard disk. The communication unit 607 is equipped with a wireless interface, a wired interface, or both. The communication unit 607 outputs generated image signals to the outside of the photoelectric conversion apparatus 600 and receives various signals from the outside.

608 denotes a network. The network 608 is formed by, for example, multiple routers, switches, and cables that satisfy communication standards such as Ethernet^{®}. Client devices transmit control signals and image signals of the photoelectric conversion apparatus 600 via the network 608.

Note that, for example, the image processing unit 603, the recognition unit 604, and the storage unit 606 in Fig. 6 need not be mounted on the photoelectric conversion apparatus 600. They may be installed in, for example, an external terminal for remote control of the photoelectric conversion apparatus 600, the external terminal being provided separately from the photoelectric conversion apparatus 600.

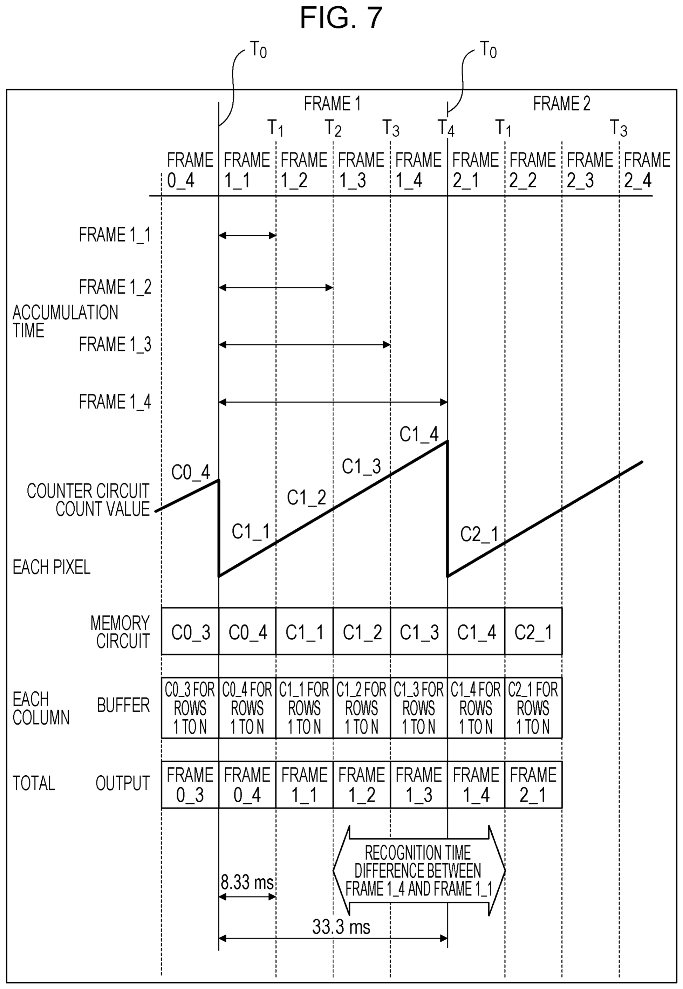

Fig. 7 is a diagram for describing a photoelectric conversion method performed by the camera controller 605 according to the present embodiment. In the present embodiment, one frame having a length of 33.3 ms is divided into four frames. That is, as illustrated in Fig. 7, a frame 1 (a first frame) is divided into frames 1_1, 1_2, 1_3, and 1_4 having an equal period (8.33 ms). That is, the frames 1_1, 1_2, 1_3, and 1_4 are multiple subframes in the first frame. For each of the multiple subframes, non-destructive readout from the photoelectric conversion element 100 is possible.

Note that the frame 1_1 has an accumulation time (an exposure period) from a time T0, which is the start time of the frame 1, to a time T1. The frame 1_2 has an accumulation time (an exposure period) from the time T0 to a time T2 because non-destructive readout is possible. The frame 1_3 has an accumulation time (an exposure period) from the time T0 to a time T3. The frame 1_4 has an accumulation time (an exposure period) from the time T0 to a time T4. That is, the accumulation times (exposure periods) of the multiple subframes read out during the accumulation time (exposure period) of the frame 1 have different lengths from each other.

The counter circuits 211 are reset at the time T0, and count values C1_1, C1_2, C1_3, and C1_4 are acquired at the times T1 to T4, respectively, from the counter circuits 211.

The count values C1_1, C1_2, C1_3, and C1_4 are temporarily stored in the memory circuits 212. The signals for one row temporarily stored in the memory circuits 212 are sequentially output from the photoelectric conversion element 100 through the buffers of the readout circuit 112.

In this manner, according to the present embodiment, the signals accumulated during the period of the frame 1_1 are read out from the time T1 to the time T2 and are promptly processed by the recognition unit 604. Thus, image recognition can be performed promptly. Similarly, the signals accumulated during the period of the frame 1_2, those accumulated during the period of the frame 1_3, and those accumulated during the period of the frame 1_4 are sequentially read out from the time T2 to the time T3, from the time T3 to the time T4, and from the T4 to the time T1, respectively. This allows repeated image recognition. In other words, during an image capturing period for one frame, the image processing unit (acquisition unit) 603 acquires multiple subframes (image signals) having different exposure periods, and the recognition unit 604 performs a predetermined recognition process on the acquired subframes.

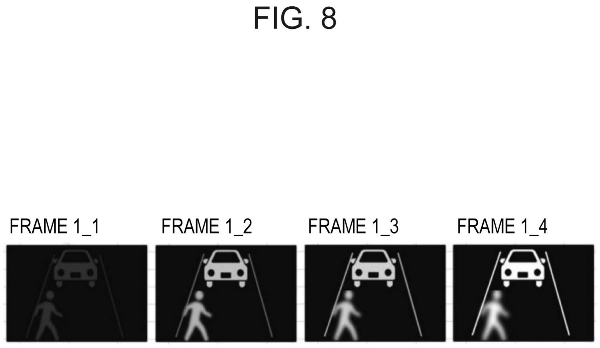

Fig. 8 is a diagram illustrating an example of images in the multiple frames obtained as a result of division. As illustrated in Fig. 8, the image in the frame 1_1 is darker because the accumulation time (exposure period) is short; however, motion blur of a moving person is reduced. In contrast, the accumulation time (exposure period) increases in the order of the frame 1_2, the frame 1_3, and the frame 1_4, resulting in subject blur. Note that stationary vehicles and white lines do not exhibit blur, and the contrast increases as the accumulation time (exposure period) increases.

In this manner, in the present embodiment, there are a first accumulation time (exposure period) and a second accumulation time (exposure period) within one frame. The first accumulation time is shorter than the second accumulation time, and control is performed such that the signal generated during the first accumulation time is output from the end of the first accumulation time to the end of the second accumulation time (exposure period).

Moreover, in the present embodiment, the first accumulation time (exposure period) and the second accumulation time (exposure period) overlap, and the first accumulation time and the second accumulation time start simultaneously. Furthermore, the end of the second accumulation time is a frame boundary, and the second accumulation time is an integer multiple of the first accumulation time.

That is, an image with a short accumulation time (exposure period) and an image with a long accumulation time (exposure period) are generated, and the timing at which the short accumulation time (exposure period) ends is set earlier than the timing at which the long accumulation time (exposure period) ends. As soon as the short accumulation time (exposure period) ends, the image is output and sent to the recognition unit 604 of the following stage. The subject is then recognized based at least on the image signal generated during the first accumulation time (exposure period). The recognition unit 604 recognizes the subject based at least on the signal generated during the first accumulation time (exposure period).

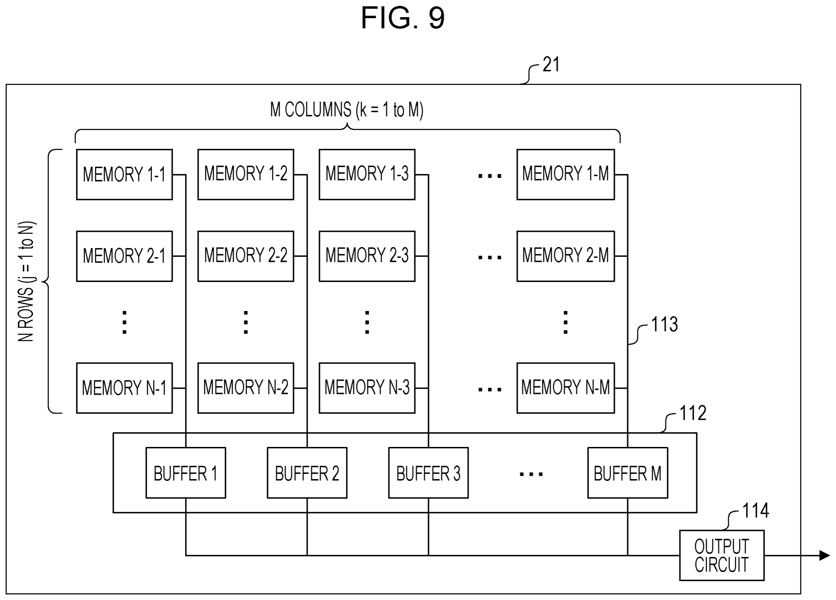

Fig. 9 is a diagram illustrating the relationship between memory circuits and buffers in the present embodiment. Fig. 9 illustrates a state where the memory circuits 212 in the signal processing circuits 103 in Fig. 3 are arranged in N rows and M columns, and the individual memory circuits are represented as memories 1-1 to N-M. Buffers 1 to M in Fig. 9 represent buffers included in the readout circuit 112 in Fig. 3. The output circuit 114 in Fig. 9 corresponds to the output circuit 114 in Fig. 3.

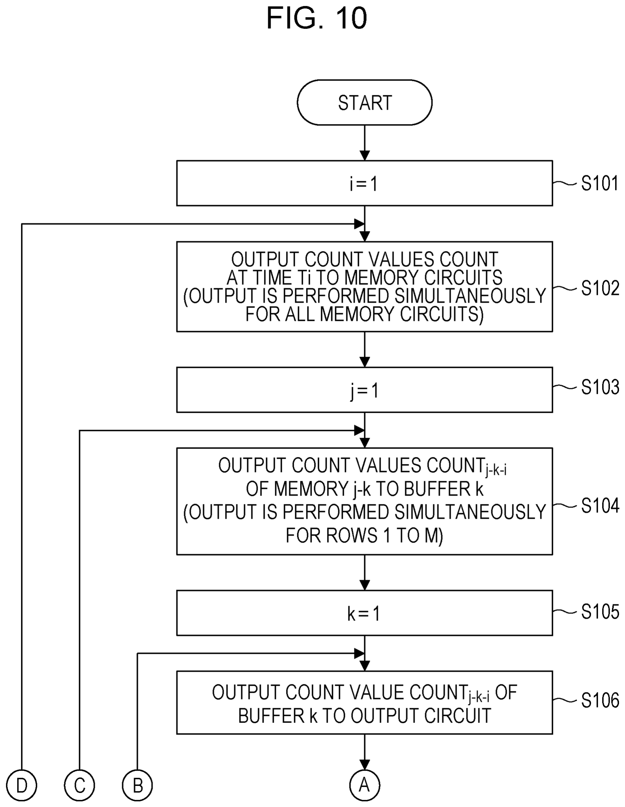

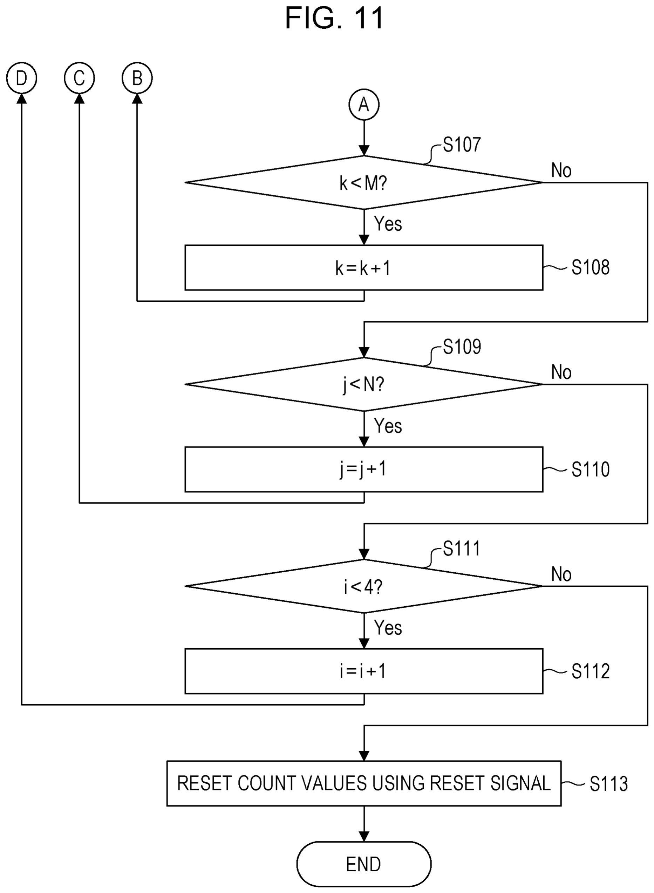

Fig. 10 is a flowchart detailing an example of the way in which the photoelectric conversion element according to the present embodiment is driven. Fig. 11 is a flowchart that is a continuation of Fig. 10. Note that the operation of each step in the flowcharts in Figs. 10 and 11 is performed sequentially by the CPU or another device serving as a computer in the camera controller 605 executing the computer program stored in the memory.

In Step S101 in Fig. 10, set i = 1. Next, in Step S102, the count values Count of the counter circuits 211 at a time Ti are output to the memory circuits 212. In this case, the count values Count are simultaneously output to all the memory circuits 212. This operation corresponds to the operation at the time T1 in Fig. 7.

Next, set j = 1 in Step S103, and the count value Countⱼ₋ₖ₋ᵢ in the memory circuit j-k in Fig. 9 is output to the buffer in Step S104. In this case, the count values for the columns 1 to M are simultaneously output to the buffers. This operation means an operation to acquire the count values for the row 1 into the buffers.

Next, set k = 1 in Step S105, and the count value Countⱼ₋ₖ₋ᵢ of the buffer k is output to the output circuit 114 in Step S106. This operation corresponds to an operation to read out the signal of the buffer in the leftmost column in Fig. 9 from the output circuit 114.

Next, the process proceeds through "A" to Step S107 in Fig. 11. In Step S107, it is determined whether k < M. If No, k is increased by 1 as k = k + 1 in Step S108, and the process returns through "B" to Step S106 to perform the operation in Step S106. This operation corresponds to an operation to read out the signal of the buffer in the second column from the left in Fig. 9 from the output circuit 114.

In a case where a determination of No is obtained in Step S107, namely a case where k = M, it means that the signal of the buffer in the column M in Fig. 9 has been read out from the output circuit 114. Next, the process proceeds to Step S109, and it is determined whether j < N. If Yes in Step S109, j is increased by 1 as j = j + 1 in Step S110, and the process returns through "C" to Step S104. This corresponds to an operation to start reading the next row.

In a case where a determination of No is made in Step S109, it means that all rows have been read, so that the process proceeds to Step S111 to determine whether i < 4. In a case where a determination of Yes is made in Step S111, i is increased by 1 as i = i + 1 in S112, and the process returns through "D" to Step S102. This operation corresponds to an operation to start reading at the next time T2.

In a case where a determination of No is made in Step S111, it means that the reading at a time T4 is completed, and the process proceeds to Step S113 to reset the counter circuits 211 using a reset signal. This operation corresponds to a reset operation for the counter circuits 211 at the time T4 in Fig. 7. In this manner, the signals accumulated in the photoelectric conversion element 100 can be sequentially read out.

As described above, images with the first accumulation time (exposure period) are darker but exhibit less moving subject blur. Images with the second accumulation time (exposure period) are brighter but exhibit more moving subject blur. Thus, the accumulation time (exposure period) to be selected in terms of the recognition rate of the subject depends on the brightness of the image capturing environment and the moving speed of the subject. In this case, it is necessary to cause the recognition unit 604 to perform a recognition process on images acquired using multiple accumulation times (exposure periods) to calculate the recognition rate. In the present embodiment, image recognition is performed on each of the images of the frames 1_1 to 1_4 to calculate the respective recognition rates. The accumulation time (exposure period) to be selected for subject recognition can be grasped by comparing the recognition rates from each other. However, if the recognition unit 604 performs the recognition process on the images acquired using multiple accumulation times (exposure periods), the number of images to be processed will increase and the processing load will increase. The processing load of the recognition unit 604 is further increased by performing the recognition process on images acquired using the multiple accumulation times (exposure periods) for every frame.

However, if the recognition rate of the subject does not change significantly, it is not necessary to perform the recognition process every frame and compare the recognition rates. Thus, under conditions where the recognition rate of the subject does not change significantly, the recognition rates in images acquired using the multiple accumulation times (exposure periods) are calculated once. In the next and subsequent frames, the recognition process is performed only on the images acquired using the accumulation times (exposure periods) with which the recognition rate is greater than or equal to a certain level. This makes it possible to reduce the processing load of the recognition unit 604 while maintaining the recognition rate.

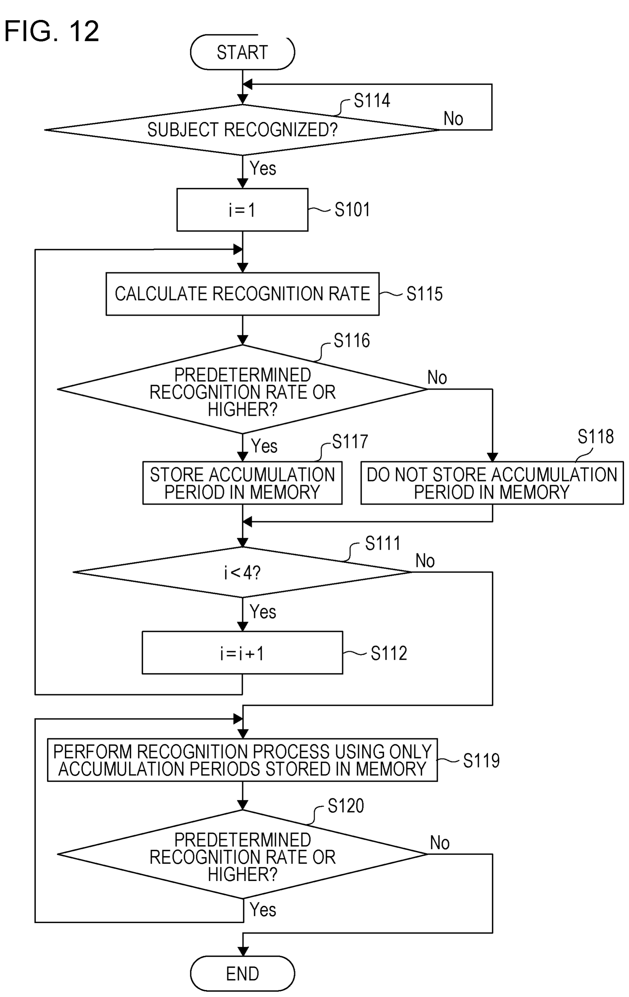

Fig. 12 is a flowchart detailing an example of driving to reduce processing load in the present embodiment. Note that the operation of each step in the flowchart in Fig. 12 is performed sequentially by the CPU or another device serving as the computer in the camera controller 605 executing the computer program stored in the memory.

In Step S114, it is determined whether a target subject has been recognized by the recognition unit 604. If No, it means that the target subject has not been recognized, and monitoring continues until the target subject is recognized in Step S114. If Yes, the target subject has been recognized, and thus the process proceeds to Step S101.

Step S101 is substantially the same processing as in Fig. 10, and thus the description will be omitted. In Step S115, the recognition unit 604 calculates the recognition rate of the target subject.

In Step S116, it is determined whether the recognition rate calculated in Step S115 is greater than or equal to a predetermined recognition rate. If Yes, it means that the recognition rate of the subject is high, and thus the process proceeds to Step S117. In Step S117, information regarding the accumulation time (exposure period) used to capture the image of the target is stored in the memory in the camera controller 605. If No, it means that the recognition rate of the subject is low, and thus the process proceeds to Step S118. In Step S118, information regarding the accumulation time (exposure period) used to capture the image of the target is not stored in the memory in the camera controller 605. In other words, the camera controller 605 functions as an identification unit that identifies subframes for which the results of the recognition process performed by the recognition unit 604 satisfy predetermined conditions. In the present embodiment, description will be made assuming that one of the predetermined conditions is that the recognition rate of the subject is greater than or equal to a predetermined recognition rate. The rest of the predetermined conditions will be described below.

Steps S111 and S112 are substantially the same processing as in Fig. 11, and thus the description will be omitted.

In a case where a determination of No is made in Step S111, calculation of the recognition rates for the respective frames 1_1, 1_2, 1_3, and 1_4 is completed. The case will be considered in which the recognition unit 604 performs the recognition process on a frame (a second frame) that is or after a frame 2, the frame 2 being a frame after the frame 1. In this case, in Step S119, the recognition process is performed on subframes read out using the accumulation times (exposure periods) stored in the memory in the camera controller 605 in Step S117. That is, the recognition process is performed on a subframe among the subframes determined by the camera controller 605 and read out using the accumulation time (exposure period) corresponding to the subframe that satisfies the predetermined conditions.

In Step S120, it is determined for the acquired images whether the recognition rate of the same subject as recognized in Step S114 is greater than or equal to the predetermined recognition rate. If Yes, the process returns to Step S119. In Step S119, the recognition process continues using only an accumulation time (exposure period) among the accumulation times (exposure periods) stored in the memory in the camera controller 605 in Step S117. The recognition unit 604 performs the recognition process on a subframe read out using the accumulation time (exposure period) corresponding to the subframe that satisfies the predetermined conditions. In contrast, the recognition process is not performed on subframes read out using the accumulation times (exposure periods) corresponding to the subframes that do not satisfy the predetermined conditions. If No in Step S120, it means that the recognition rate of the subject does not satisfy the predetermined recognition rate in any of the images. This flowchart is terminated because it is necessary to compare the recognition rates for images acquired again using the multiple accumulation times (exposure periods). Events that may cause a decrease in the recognition rate of the subject include sudden changes in the brightness of the image capturing environment and the moving speed of the subject. The recognition rate of the subject will also no longer satisfy the predetermined recognition rate also in a case where the subject is framed out, for example.

In the present embodiment, the example has been described in which the processing load can be reduced by performing the recognition process on subframes read out using accumulation times (exposure periods) with which the recognition rate of the subject is greater than or equal to the predetermined recognition rate. However, this is not the only case. For example, the predetermined conditions may include a condition indicating the highest recognition rate among those of multiple subframes. That is, by performing the recognition process on the subframe corresponding to the accumulation time (exposure period) with which the recognition rate is the highest, the number of times the recognition process is performed can be reduced and the processing load can be reduced.

In the present embodiment, description has been made assuming that there is one subject in the acquired images. In a case where there are multiple subjects in acquired images, the recognition rates for the images acquired using multiple accumulation times (exposure periods) are calculated once, and thereafter the recognition process is performed only on the images with accumulation times (exposure periods) with which the recognition rate is greater than or equal to a certain level. This makes it possible to reduce the processing load caused by the recognition process.

Moreover, in the present embodiment, the case has been described in which the subframes to be subjected to the recognition process are determined depending on whether the recognition rate of the subject is greater than or equal to the predetermined recognition rate. In other words, which subframes in the next frame are to be subjected to the recognition process are determined depending on whether the results of the recognition process performed by the recognition unit 604 satisfy the predetermined conditions.

In addition to whether the recognition rate mentioned above is greater than or equal to the predetermined recognition rate, the predetermined conditions can also include, for example, whether the authentication rate is greater than or equal to a predetermined authentication rate in face authentication. That is, the subframes corresponding to the accumulation times (exposure periods) with which the authentication rate is high are identified, and the authentication process is performed thereon. Other than that, the predetermined conditions can also include not merely a comparison of authentication rates, but also whether recognition availability, such as whether a particular character string or subject was recognized. That is, the recognition process is performed on subframes corresponding to the accumulation times (exposure periods) with which only specific subjects are recognized. This is applied, for example, to take into account additional conditions such as identifying subframes corresponding to accumulation times (exposure periods) for recognizing only bright or dark subjects among subjects in bright areas and subjects in dark areas in environments with high contrast in brightness.

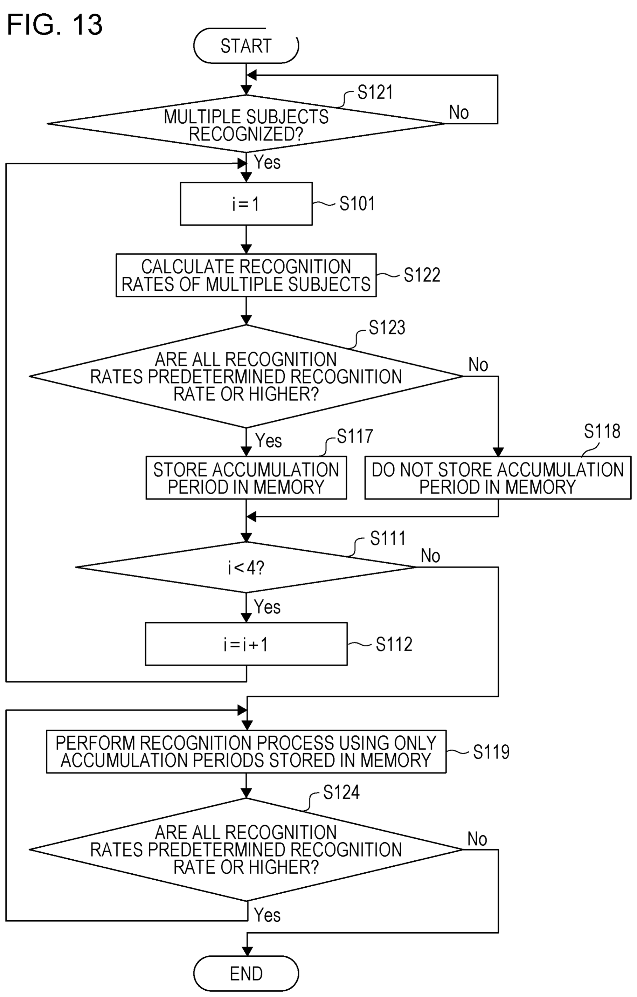

Fig. 13 is a flowchart detailing an example of driving to reduce processing load in a case where there are multiple subjects in the present embodiment. Note that the operation of each step in the flowchart in Fig. 12 is performed sequentially by the CPU or another device serving as the computer in the camera controller 605 executing the computer program stored in the memory.

In Step S121, it is determined whether multiple subjects have been recognized by the recognition unit 604. If No, it means that multiple subjects have not been recognized, and monitoring continues until target subjects are recognized in Step S121. If Yes, multiple subjects have been recognized, and thus the process proceeds to Step S101.

Step S101 is substantially the same processing as in Fig. 10, and thus the description will be omitted.

In Step S122, the recognition unit 604 calculates each of the recognition rates of the multiple subjects.

In Step S123, it is determined whether all the recognition rates calculated in Step S122 are greater than or equal to a predetermined recognition rate. If Yes, it means that the recognition rates of the multiple subjects are high. If No, it means that one or more of the multiple subjects have low recognition rates. Steps S117 and S118 are substantially the same processing as in Fig. 12, and thus the description will be omitted.

Steps S111 and S112 are substantially the same processing as in Fig. 11, and thus the description will be omitted. Step S119 is substantially the same processing as in Fig. 12, and thus the description will be omitted.

In Step S124, it is determined for the acquired images whether the recognition rates of the same multiple subjects as recognized in Step S121 are greater than or equal to the predetermined recognition rate. If Yes, the process returns to Step S119. In Step S119, the recognition process using only the accumulation times (exposure periods) stored in the memory in Step S117 continues. If No, it means that the recognition rates of the multiple subjects do not satisfy the predetermined recognition rate in any of the images. This flowchart is terminated because it is necessary to compare the recognition rates for images acquired again using the multiple accumulation times (exposure periods). Events that may cause a decrease in recognition rate include sudden changes in the brightness of the image capturing environment and the moving speeds of subjects. The recognition rates of subjects will also no longer satisfy the predetermined recognition rate also in a case where the subjects are framed out, for example.

In the present embodiment, the case has been described in which it is possible to reduce the processing load by performing the recognition process using only the accumulation times (exposure periods) with which each of the recognition rates of the multiple subjects is greater than or equal to the predetermined recognition rate. For example, the recognition processing may be performed using only the accumulation time (exposure period) with which the sum of the recognition rates of the respective subjects is the highest. For example, consider a case where the recognition rate of a person is 70% and that of a vehicle is 80% in the frame 1_1 and where the recognition rate of the person is 80% and that of the vehicle is 60% in the frame 1_2. In this case, the sum of the recognition rates in the frame 1_1 is 150% and that in the frame 1_2 is 140%. Thus, the recognition process is performed only on the frame 1_1, for which the sum of the recognition rates is higher. In a case where the predetermined recognition rate is greater than or equal to 70% in the present embodiment, except for the recognition rate of the vehicle in the frame 1_2, the recognition rates of the multiple subjects are greater than or equal to the predetermined recognition rate in both the frame 1_1 and the frame 1_2. Thus, the frame 1_1 and the frame 1_2 need to be subjected to the recognition process, but the number of images subjected to the recognition process can be reduced by performing the recognition process only on the frame having the higher total recognition rate. Thus, the processing load can be further reduced.

The accumulation times (exposure periods) with which the recognition rates of the multiple subjects are the highest may each be used to perform the recognition process. That is, in a case where multiple subjects are recognized in a first frame, the identification unit (camera controller) 605 identifies, for each of the multiple subjects, a subframe that satisfies the predetermined conditions from the first frame. For example, consider a case where the recognition rate of a person is 60% and that of a vehicle is 80% in the frame 1_1 and where the recognition rate of the person is 80% and that of the vehicle is 60% in the frame 1_2. In this case, the recognition rate of the person is higher in the frame 1_1, and the recognition rate of the vehicle is higher in the frame 1_2. Thus, it is sufficient that the recognition process be performed on subframes corresponding to the frame 1_1 and the frame 1_2 in a second frame (namely a frame after the frame 1).

Furthermore, a priority is set for each of the multiple subjects to be recognized. For example, when a person and a vehicle are simultaneously recognized, in a case where the person, for example, is given a higher priority, the recognition process may be performed on the subframes in which the person given a higher priority is recognized and that correspond to accumulation times (exposure periods) in which the recognition rate of the person is high. This priority ranking is stored as a table in the storage unit 606. In a case where multiple types of subjects are recognized, the recognition rate of the subject with the highest priority among the recognized subjects is obtained. Then, it is sufficient to determine whether the recognition rate of the subject with the highest priority is greater than or equal to the predetermined recognition rate.

In the present embodiment, the example has been described in which the recognition rates are compared within a single frame; however, this is not the only case. The recognition rates may be compared within multiple frames, and accumulation times (exposure periods) to be subjected to the recognition process performed in the next and subsequent frames may be determined.

In the present embodiment, the case has been described in which it is possible to reduce the processing load by performing the recognition process using only the accumulation times (exposure periods) with which the recognition rate of the subject is greater than or equal to the predetermined recognition rate. However, the disclosure is not limited to this. The camera controller 605 may control the photoelectric conversion element 100 to output only the accumulation times (exposure periods) with which the recognition rate of the subject is greater than or equal to the predetermined recognition rate. In a frame (the second frame) that is or after the frame 2, the subframes that satisfy the predetermined conditions and the subframes that do not satisfy the predetermined conditions are found out by the identification unit (camera controller) 605. Therefore, it is possible that non-destructive readout is not performed during the exposure periods of subframes that do not satisfy the predetermined conditions in a frame that is or after the frame 2. In other words, it is possible that the acquisition unit (image processing unit) 603 does not acquire the subframes themselves. This can realize an additional effect in reducing the power consumed by reading out subframes. The identification unit (camera controller) 605 may determine exposure periods in an image capturing period for one frame, based on the accumulation times (exposure periods) of the subframes identified by the identification unit (camera controller) 605. This can realize an additional effect in that, in image capturing in each frame, image capturing can be performed using accumulation times appropriate for the recognition process of the recognition unit 604. That is, it is no longer necessary to read out subframes themselves from the photoelectric conversion element 100.

In addition, since APDs are used in the present embodiment, unlike CMOS sensors, accumulated electric charge is not degraded by readout, and thus accumulation times (exposure periods) can overlap with each other. Moreover, since there is no readout noise, the original signal is not degraded even though readout is performed many times after a single accumulation of the original signal.

The present disclosure has been described in detail based on its embodiment. However, the disclosure is not limited to the above embodiment. Various modifications are possible based on the spirit of the disclosure, and such modifications are not excluded from the scope of the disclosure.

For example, in the above embodiment, the shortest accumulation time is a 1/4 frame period, but the length of the shortest accumulation time (exposure period) may be changed to a 1/5 frame period or a 1/3 frame period, for example, depending on the recognition accuracy of the recognition unit 604. Alternatively, the length of the shortest accumulation time (exposure period) may be changed in accordance with the brightness of the subject.

Furthermore, even in a case where a readout period is set every 1/4 frame period, the actual accumulation time (exposure period) may be set shorter than a 1/4 frame period depending on the brightness of the subject and the image recognition accuracy. That is, the counter circuits may be reset in the middle of the accumulation time (exposure period) of the frame 1_1 in Fig. 7.

Alternatively, the counter circuits may be reset once, for example, at the time T1 in Fig. 7. As a result, the count values to be read out at the time T4 may be adjusted. Note that the present embodiment includes the following combinations.

In the embodiment described above, the example has been described in which an image signal generated during the first accumulation time (exposure period) is output by the end of the second accumulation time (exposure period). However, this is not the only example.

Among the functions of the photoelectric conversion apparatus 600, the function as an image capturing device may be achieved by a separate unit. In that case, the separate unit will be an image processing apparatus that acquires multiple subframes from the photoelectric conversion element 100 in a non-destructive readout during an exposure period for one frame. It is sufficient that the image processing apparatus have the functions of the recognition unit 604 and the identification unit (camera controller) 605.

Note that a computer program that realizes one or more or all of the control functions of the above-mentioned present embodiment may be supplied to a photoelectric conversion apparatus via a network or various storage media. A computer (or a CPU, an MPU, etc.) in that photoelectric conversion apparatus may then read out and execute the program.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

The following numbered clauses form a part of the disclosure:
1. An image processing apparatus comprising:
   an acquisition unit (603) configured to acquire a plurality of subframes, which have different exposure periods during an image capturing period for one frame, from a photoelectric conversion element capable of performing a non-destructive readout for each of the plurality of subframes;
   a recognition unit (604) configured to perform a predetermined recognition process on the plurality of subframes acquired by the acquisition unit (603) in a first frame; and
   an identification unit (605) configured to identify, among the plurality of subframes, a subframe for which a result of the predetermined recognition process performed by the recognition unit (604) satisfies a predetermined condition,
   characterized in that
   in a case where the predetermined recognition process is performed on the plurality of subframes acquired by the acquisition unit (603) in a second frame, which is a frame after the first frame,
   the recognition unit (604) performs the predetermined recognition process on a subframe among the plurality of subframes acquired by the acquisition unit (603) in the second frame, the subframe corresponding to the subframe that is identified by the identification unit (605) and satisfies the predetermined condition in the first frame.
2. The image processing apparatus according to clause 1, wherein the recognition process is not performed on a subframe among the plurality of subframes acquired by the acquisition unit (603) in the second frame, the subframe corresponding to a subframe that does not satisfy the predetermined condition.
3. The image processing apparatus according to clause 1, wherein the result of the recognition process includes a recognition rate of a recognition target, and
   the predetermined condition is that the recognition rate is greater than or equal to a predetermined recognition rate.
4. The image processing apparatus according to clause 3, wherein the predetermined condition is a condition indicating a higher or highest recognition rate among recognition rates for the plurality of respective subframes on which the recognition unit (604) has performed the recognition process.
5. The image processing apparatus according to clause 1, wherein the predetermined condition is whether a recognition target has been recognized by the recognition unit (604).
6. The image processing apparatus according to clause 1, wherein the acquisition unit (603) does not acquire a subframe during an exposure period corresponding to a subframe that does not satisfy the predetermined condition from among a plurality of subframes read out during an exposure period of the second frame.
7. The image processing apparatus according to clause 3, wherein a priority is set for each of a plurality of subjects that are recognition targets of the recognition unit (604), and
   the predetermined condition is a condition indicating a subframe for which the recognition rate is greater than or equal to the predetermined recognition rate and in which a subject whose priority is higher or highest has been recognized.
8. The image processing apparatus according to clause 1, wherein in a case where a plurality of subjects are recognized in the first frame through the predetermined recognition process performed by the recognition unit (604), the identification unit (605) identifies, for each of the plurality of subjects, a subframe that satisfies the predetermined condition.
9. The image processing apparatus according to clause 1, further comprising:
   a determination unit (605) configured to determine an exposure period in an image capturing period for the one frame, wherein
   the determination unit (605) determines the exposure period in the image capturing period for the one frame so as to reduce a difference between the exposure period and the exposure period of the subframe identified by the identification unit (605).
10. The image processing apparatus according to clause 1, wherein an exposure period for the first frame and exposure periods for the plurality of subframes acquired by the acquisition unit (603) in the first frame start simultaneously.
11. The image processing apparatus according to clause 1, wherein the photoelectric conversion element includes an avalanche photodiode.
12. An image processing method comprising:
   an acquisition step for acquiring a plurality of subframes, which have different exposure periods during an image capturing period for one frame, from a photoelectric conversion element capable of performing a non-destructive readout for each of the plurality of subframes;
   a recognition step for performing a predetermined recognition process on the plurality of subframes acquired in the acquisition step in a first frame; and
   an identification step for identifying, among the plurality of subframes, a subframe for which a result of the predetermined recognition process performed in the recognition step satisfies a predetermined condition, wherein
   in a case where the predetermined recognition process is performed on the plurality of subframes acquired in the acquisition step in a second frame, which is a frame after the first frame,
   among the plurality of subframes acquired in the acquisition step in the second frame, the predetermined recognition process is performed on a subframe corresponding to the subframe that is identified in the acquisition step and satisfies the predetermined condition in the first frame.
13. A computer program comprising instructions which, when the program is executed by a computer, cause the computer to carry out the method of clause 12.
14. A computer-readable storage medium storing the program according to clause 13.

## Claims

1. An image processing apparatus comprising:
an acquisition unit (603) configured to acquire a plurality of subframes, which have different exposure periods during an image capturing period for one frame, from a photoelectric conversion element capable of performing a non-destructive readout for each of the plurality of subframes;
a recognition unit (604) configured to perform a predetermined recognition process on the plurality of subframes acquired by the acquisition unit (603) in a first frame; and
an identification unit (605) configured to identify, among the plurality of subframes, a subframe for which a result of the predetermined recognition process performed by the recognition unit (604) satisfies a predetermined condition, wherein:
in a case where the predetermined recognition process is to be performed on a plurality of subframes acquired by the acquisition unit (603) in a second frame, which is a frame after the first frame,
the recognition unit (604) is configured to perform the predetermined recognition process on a subframe among the plurality of subframes acquired by the acquisition unit (603) in the second frame, the subframe corresponding to the subframe that is identified by the identification unit (605) and satisfies the predetermined condition in the first frame.

2. The image processing apparatus according to claim 1, wherein the recognition process is not performed on a subframe among the plurality of subframes acquired by the acquisition unit (603) in the second frame, the subframe corresponding to a subframe that does not satisfy the predetermined condition.

3. The image processing apparatus according to claim 1 or claim 2, wherein the result of the recognition process includes a recognition rate of a recognition target, and
the predetermined condition is that the recognition rate is greater than or equal to a predetermined recognition rate.

4. The image processing apparatus according to claim 3, wherein the predetermined condition is a condition indicating a higher or highest recognition rate among recognition rates for the plurality of respective subframes on which the recognition unit (604) has performed the recognition process.

5. The image processing apparatus according to claim 1, wherein the predetermined condition is whether a recognition target has been recognized by the recognition unit (604).

6. The image processing apparatus according to any preceding claim, wherein the acquisition unit (603) does not acquire a subframe during an exposure period corresponding to a subframe that does not satisfy the predetermined condition from among a plurality of subframes read out during an exposure period of the second frame.

7. The image processing apparatus according to claim 3, wherein a priority is set for each of a plurality of subjects that are recognition targets of the recognition unit (604), and
the predetermined condition is a condition indicating a subframe for which the recognition rate is greater than or equal to the predetermined recognition rate and in which a subject whose priority is higher or highest has been recognized.

8. The image processing apparatus according to any preceding claim, wherein in a case where a plurality of subjects are recognized in the first frame through the predetermined recognition process performed by the recognition unit (604), the identification unit (605) identifies, for each of the plurality of subjects, a subframe that satisfies the predetermined condition.

9. The image processing apparatus according to any preceding claim, further comprising:
a determination unit (605) configured to determine an exposure period in an image capturing period for the one frame, wherein
the determination unit (605) determines the exposure period in the image capturing period for the one frame so as to reduce a difference between the exposure period and the exposure period of the subframe identified by the identification unit (605).

10. The image processing apparatus according to any preceding claim, wherein an exposure period for the first frame and exposure periods for the plurality of subframes acquired by the acquisition unit (603) in the first frame start simultaneously.

11. The image processing apparatus according to any preceding claim, wherein the photoelectric conversion element includes an avalanche photodiode.

12. An image processing method comprising:
an acquisition step for acquiring a plurality of subframes, which have different exposure periods during an image capturing period for one frame, from a photoelectric conversion element capable of performing a non-destructive readout for each of the plurality of subframes;
a recognition step for performing a predetermined recognition process on the plurality of subframes acquired in the acquisition step in a first frame; and
an identification step for identifying, among the plurality of subframes, a subframe for which a result of the predetermined recognition process performed in the recognition step satisfies a predetermined condition, wherein
in a case where the predetermined recognition process is to be performed on a plurality of subframes acquired in the acquisition step in a second frame, which is a frame after the first frame,
among the plurality of subframes acquired in the acquisition step in the second frame, the predetermined recognition process is performed on a subframe corresponding to the subframe that is identified in the acquisition step and satisfies the predetermined condition in the first frame.

13. A computer program comprising instructions which, when the program is executed by a computer, cause the computer to carry out the method of claim 12.

14. A computer-readable storage medium storing the program according to claim 13.
